# EUROPÄISCHE PATENTSCHRIFT

(11) **EP 1 980 870 B1**
(45) Veröffentlichungstag und Bekanntmachung des Hinweises auf die Patenterteilung: **08.06.2011**
(21) Anmeldenummer: 08102741.9
(22) Anmeldetag: 19.03.2008
(51) Int. Cl.: G01S 7/481

(54) **Optoelektronischer Sensor und Verfahren zur abgeschirmten Signalübertragung**
Opto-electronic sensor and method for shielded signal transmission
Capteur optoélectronique et procédé de transmission blindée de signal

(30) Priorität: 13.04.2007 DE 102007017631
(43) Veröffentlichungstag der Anmeldung: 15.10.2008
(73) Patentinhaber: SICK AG, 79183 Waldkirch (DE)
(72) Erfinder: Hug, Gottfried, 79183 Waldkirch (DE); Torabi, Dr. Bahram, 79100 Freiburg (DE); Marra, Martin, 79117 Freiburg (DE)
(74) Vertreter: Hehl, Ulrich

(56) Entgegenhaltungen:
- EP-A- 1 367 363
- DE-A1- 10 130 763
- US-B1- 6 420 778
- US-B1- 6 522 395

## Beschreibung

Die Erfindung betrifft einen optoelektronischen Sensor und ein Verfahren zur abgeschirmten Signalübertragung nach den Oberbegriffen von Anspruch 1 beziehungsweise 14.

In vielen optoelektronischen Sensoren wird Licht nicht einfach nur ausgesandt, d. h. ein Lichtsender ein- und abgeschaltet, sondern als optisches Sendemuster abgestrahlt. Dabei kann dieses Sendemuster Informationen zu Konfiguration oder Synchronisation enthalten oder sogar, wie bei einer Datenlichtschranke, als Träger für einen Datenkanal dienen.

Eine weitere Anwendung ist die optische Bestimmung einer Entfernung nach dem Prinzip des Laufzeitverfahrens. Das dem Lichtstrahl aufgeprägte Sendemuster wird von einem Objekt reflektiert und nach Empfang in dem Sensor mit einem intern erzeugten Referenzmuster verglichen. Daraus lässt sich der Lichtweg und damit auch der Abstand errechnen. In der Praxis werden im Wesentlichen zwei Verfahren angewandt. Bei dem einen Verfahren ist das Sendemuster ein einfacher Lichtpuls, dessen Laufzeit gemessen wird. Bei dem anderen Verfahren ist das Sendemuster eine Sinusmodulation, wobei die Phasenlage des Sinus gegenüber einem Referenzsinus modulo der Periode des Sinus der Laufzeit entspricht.

Die Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remit tierenden Ziels reagieren. Eine besondere Anwendung ist eine Reflexionslichtschranke, bei welcher der Abstand zwischen Lichtsender und Reflektor überwacht wird.

Um ein optisches Sendemuster zu erzeugen, muss der Lichtsender mit einem entsprechenden elektrischen Sendemuster angesteuert werden. Dafür ist die Steuerung des Sensors über eine Sendeleitung mit dem Lichtsender beziehungsweise dessen Treiberschaltung verbunden. Jedes zeitlich variierende Sendemuster, besonders aber solche mit schnellen Anstiegszeiten oder großen Signalpegeln, verursacht gerade in geringen Abständen ein elektrisches Übersprechen. Je kleiner das Schaltungsdesign bei zunehmender Miniaturisierung wird, umso stärker machen sich Probleme dieses Übersprechens bemerkbar.

Wenn der Sensor, wie bei der Entfernungsmessung, einen eigenen Lichtempfänger aufweist, ist das Empfangssignal wegen Umgebungslicht, anderer Lichtquellen, insbesondere auch weiteren optoelektronischen Sensoren, mit einem Störpegel überlagert, der in einem Bereich von bis zu sechs Dekaden schwanken kann. Auch das Nutzsignal kann je nach Entfernung erhebliche Amplitudenunterschiede zeigen. Ein Übersprechen von der Sendeleitung darf die Auswertung des Nutzsignals angesichts dieser Schwierigkeiten nicht zusätzlich behindern.

Die EP 1 367 363 A2 offenbart einen optoelektronischen Sensor, dessen Lichtsender für das Aussenden von Sendelicht ausgebildet ist, welches gemäß einem Lichtsendesteuersignal moduliert wird. Auf die Problematik eines Übersprechens der elektrischen Sendesignale zu diesem Lichtsender auf den Lichtempfänger geht diese Schrift aber nicht ein.

Aus der US 6 420 778 B1 ist eine differentielle Leitungsstruktur für eine gedruckte Mehrschichtleiterplatte bekannt. Dabei liegt eine erste Gruppe von Einzelleitern in einer ersten Schicht und eine zweite Gruppe von Einzelleitern hierzu vertikal beabstandet in einer zweiten Schicht. Jeweils ein Einzelleiter der ersten Gruppe bildet mit einem gegenüberliegenden Einzelleiter der zweiten Gruppe eine differentielle Leitung. Zusätzlich zu der vertikalen Beabstandung durch die Schichten sind die beiden Gruppen auch zueinander versetzt angeordnet. Anspruchsgemäß soll durch diese beiden Maßnahmen das Übersprechen von einer differentiellen Leitung auf die nächste gegenüber einer Anordnung innerhalb derselben Schicht reduziert werden. Jede einzelne der differentiellen Leitungen weist jeweils zwei Einzelleiter auf.

Es ist im Stand der Technik bekannt, zur Verringerung des Übersprechens elektrisch leitende Schirmaufbauten zur Kapselung sensibler Schaltungsteile vorzusehen. Es ist weiter bekannt, Signale differenziell zu führen, weil sich dann die elektromagnetische Koppelung, die zum Übersprechen führt, partiell auslöscht. Es ist drittens bekannt, bei mehrschichtigen Leiterplatten metallische Schirmlagen vorzusehen, welche innere Leiter abschirmen. Keine dieser Maßnahmen ist aber einzeln und auch in Kombination in der Lage, bei sehr kleinen Abständen zwischen Sendeleitung und empfindlichem Schaltungsteil das Übersprechen in dem erforderlichen Maß zu verhindern. Die differenzielle Signalführung eliminiert die durch den Ansteuerstrom verursachten Magnetfelder nicht vollständig, da die Leiterbahnen immer durch einen Mindestabstand voneinander getrennt sind. Die Dämpfungswirkung von Schirmaufbauten um sensible Schaltungsteile sowie von Schirmlagen in der Leiterplatte ist nicht ausreichend.

Es ist daher Aufgabe der Erfindung, eine größtmögliche Übersprechdämpfung, besonders für geringe Abstände, zu erzielen.

Diese Aufgabe wird durch einen Sensor gemäß Anspruch 1 und ein Verfahren zur abgeschirmten Signalübertragung gemäß Anspruch 14 gelöst. Die erfindungsgemäße Lösung hat den Vorteil, dass es möglich wird, die Sendeleitung, die besonders bei schnellen Änderungen des elektrischen Sendemusters ein Übersprechen verursacht, auch mit kurzem Abstand an empfindlichen Schaltungsteilen vorbeizuführen. Dies ist eine Grundvoraussetzung für weitere Miniaturisierung und erlaubt ein Schaltungslayout auf einer wesentlich kleineren Leiterplatte, als dies bisher möglich war. Der erfindungsgemäße Sensor kann damit bei gleicher Funktionalität wesentlich kleiner ausgelegt werden, als ein herkömmlicher Sensor. Zu beachten ist, dass das Verhältnis von Sende- zu Empfangssignal einen Faktor 10⁷ annehmen kann und auch die Störstrahlung um bis zu sechs Dekaden schwankt. Bei der hierfür erforderlichen Genauigkeit zerstört ein Übersprechen, dass nicht hinreichend gedämpft ist, jegliche Auswertungsmöglichkeit.

Die Erfindung beruht auf der Grundidee, einerseits bereits die Störaussendung zu minimieren, indem die Amplitude des Steuersignals durch differenzielle Ansteuerung auf mehrere Leiter verteilt wird. Andererseits werden elektromagnetische Koppelungsmechanismen zwischen der Störquelle und dem sensiblen Schaltungsteil reduziert, weil durch die besondere Anordnung der Einzelleiter eine weitgehende Auslöschung von störenden Magnetfeldern erfolgt.

Vorteilhafterweise sind Steuerung, Sendeleitung und Lichtsender für eine Signalübertragung über den Strom in Impedanzanpassung ausgebildet. Dies ermöglicht maximale Leistungsübertragung und minimiert ein Übersprechen durch sich überlagernde stehende Wellen.

Bevorzugt weist die Sendeleitung zwei äußere und zwei innere Einzelleiter auf, die insbesondere gleichmäßig voneinander beabstandet in einer gemeinsamen Ebene liegen, und die Steuerung ist dafür ausgebildet, den Lichtsender doppelt differenziell anzusteuern, indem jeweils ein gleicher Anteil des Gesamtsignals auf den beiden äußeren Einzelleitern in der einen Richtung sowie mit entgegengesetztem Vorzeichen auf den beiden inneren Einzelleitern in der anderen Richtung übertragen wird. In dieser besonderen Ausgestaltung der Sendeleitung ist zum einen die Amplitude gegenüber einer gewöhnlichen differenziellen Ansteuerung halbiert, zum anderen überlagern sich die erzeugten Magnetfelder aufgrund der Symmetrien besonders weitgehend, und beide Maßnahmen zusammen führen zu einer besonders guten Übersprechdämpfung.

Vorteilhafterweise weist der Sensor einen Lichtempfänger auf, wobei die Sendeleitung einen geringen Abstand von insbesondere ungefähr 5 mm zu dem Lichtempfänger hat. Der Lichtempfänger ist ein Beispiel für ein Schaltungsteil, dass besonders empfindlich gegen Übersprechen ist. In vielen der eingangs beschriebenen Anwendungen, wie einem entfernungsmessenden Sensor oder einer Lichtschranke, ist ein solcher Lichtempfänger vorgesehen. Die erfindungsgemäß besonders hohe Übersprechdämpfung, ermöglicht sehr geringe Abstände zwischen Sendeleitung und Lichtempfänger und somit letztendlich besonders kleine Sensoren.

In einer vorteilhaften Ausführungsform sind Lichtsender, Lichtempfänger und Steuerung in dieser Reihenfolge nebeneinander auf einer gemeinsamen Platine angeordnet. Die Sendeleitung führt dabei an dem Lichtempfänger vorbei, was wegen der verbesserten Übersprechdämpfung möglich ist. Mit den drei genannten Elementen sind die wesentlichen Bestandteile eines Sensors kompakt und auf kleinstem Raum auf einer Platine zusammengefasst und können somit auch kostengünstig zu dem Sensor verbunden werden.

Dabei ist bevorzugt die Platine mehrschichtig und die Sendeleitung auf einer inneren Schicht vorgesehen, welche durch Schirmlagen und Durchkontaktierungen in einer abschirmenden Kammer eingeschlossen ist. Die mehrschichtige Platine erlaubt, die Bauteile auf den beiden gegenüberliegenden Seiten anzuordnen, und somit noch einmal eine deutliche Miniaturisierung. Da die Sendeleitung in einer abschirmenden Kammer geführt ist, wird die Übersprechdämpfung nochmals deutlich erhöht.

Bevorzugt ist die Steuerung zumindest teilweise in ASIC oder auf einem programmierbaren Logikbaustein implementiert, insbesondere einem FPGA. Dies ermöglicht eine kostengünstige, flexible Entwicklung und Herstellung der Steuerung.

Gemäß einer vorteilhaften Weiterbildung sind der Logikbaustein auf der einen und Lichtempfänger und Lichtsender auf der anderen Seite der Platine angeordnet. Aufgrund der mehrschichtigen Platine und der Sendeleitung im Inneren, welche Steue rung und Lichtsender verbindet, ist dieses besonders platzsparende Design möglich.

Bevorzugt ist ein Schirmaufbau um den Lichtempfänger vorgesehen. Dies gibt dem Lichtempfänger unmittelbar eine weitere Dämpfung gegen Übersprechen.

Vorteilhafterweise ist die Steuerung dafür ausgebildet, aus einer Lichtlaufzeit von Lichtsender zu Lichtempfänger die Entfernung oder eine Entfernungsänderung eines remittierenden oder reflektierenden Objekts zu bestimmen. Das erfindungsgemäß ermöglichte kompakte Design mit einer Sendeleitung, deren Übersprechen den Lichtempfänger nur noch in einem nicht mehr störenden Maße erreicht, erlaubt besonders kleine Sensoren für diese Anwendung herzustellen.

Dabei weist bevorzugt das Sendemuster Pulse zur Bestimmung der Lichtlaufzeit aus einer Pulslaufzeit oder eine aufmodulierte Schwingung zur Bestimmung der Lichtlaufzeit aus einer Phasenverschiebung auf. Beide Verfahren zur Lichtlaufzeitbestimmung erfordern rasche zeitliche Änderungen im Sendemuster, und durch die erfindungsgemäße Übersprechdämpfung wird ermöglicht, dadurch auftretende Störungen weit genug zu reduzieren, um zuverlässig auswerten zu können.

Bevorzugt ist der Sensor zur Messung von nahen Entfernungen ausgebildet, bei denen Sende- und Empfangspuls zeitlich überlappen. Derartige nahe Entfernungen, im Grenzfall eine Entfernung von Null, bedeuten, dass der Sendepuls noch auf der Sendeleitung liegt, während der Lichtempfänger den optischen Puls bereits empfängt. Das Übersprechen durch die steilen Flanken des Pulses geschieht also gerade zu einem besonders kritischen Zeitpunkt. Wegen der erfindungsgemäßen Übersprechdämpfung wird aber auch dieser Messbereich von Null bis wenige Meter ermöglicht, beispielsweise 2 m.

In einer weiteren vorteilhaften Ausführungsform ist der Sensor ein Lichtgitter mit einer Vielzahl von Lichtsendern und einer gleichgroßen Anzahl von Lichtempfängern, die insbesondere eine gemeinsame Steuerung aufweisen. Auch für diese Anwendung in einem Lichtgitter lässt sich die erfindungsgemäß abgeschirmte Sendeleitung dafür verwenden, besonders kleine Platinen für die Elektronik des Lichtgitters herzustellen.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine Blockdarstellung einer Ausführungsform des erfindungsgemäßen Sensors und seines Überwachungsbereichs;
- Fig. 2: eine Draufsicht auf eine Schemadarstellung des Schaltungslayouts einer Platine der Ausführungsform gemäß Figur 1 mit einer Ausschnittsvergrößerung zur Erläuterung der Struktur einer erfindungsgemäß abgeschirmten Sendeleitung;
- Fig. 3: eine Querschnittsdarstellung einer Sendeleitung gemäß der Ausschnittsvergrößerung in Figur 2;
- Fig. 4: die Darstellung des Magnetfelds und des Übersprechstroms bei einem Signalstrom auf einer einfachen Signalleitung nach dem Stand der Technik;
- Fig. 5: eine Darstellung gemäß Figur 4 auf einer differenziellen Signalleitung nach dem Stand der Technik; und
- Fig.6: eine Darstellung gemäß Figur 4 des Übersprechverhaltens einer doppelt differenziellen Sendeleitung nach der Ausführungsform der Erfindung gemäß Fig. 1-3.

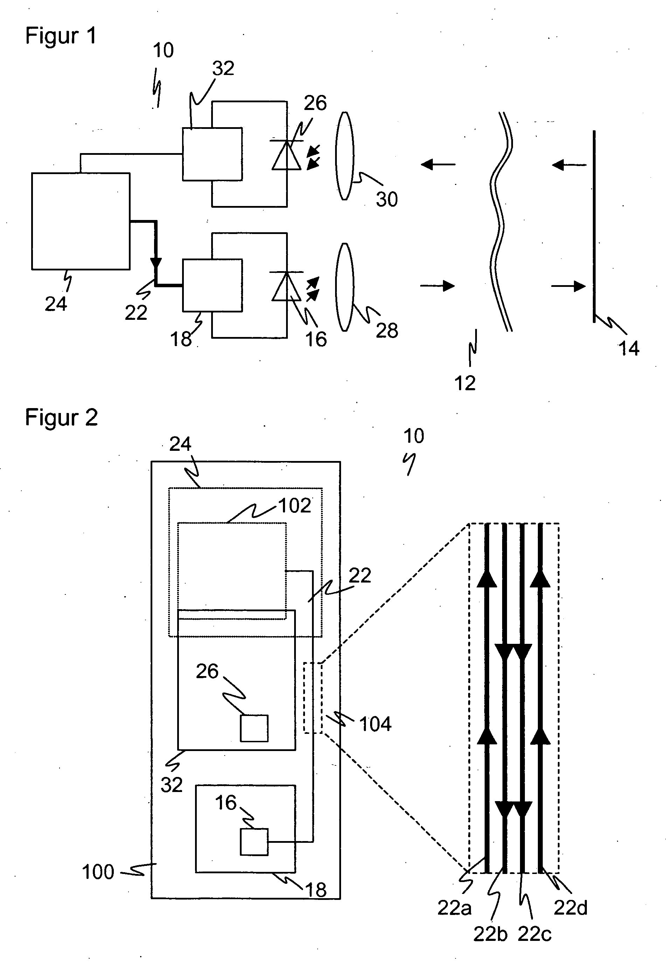

Figur 1 zeigt eine Ausführungsform des erfindungsgemäßen optoelektronischen Sensors 10 und seines Überwachungsbereichs 12 in einem vereinfachten Blockschaltbild. Der Sensor 10 kann jeder der in der Einleitung genannten Typen sein, also beispielsweise eine Lichtschranke, insbesondere eine Datenlichtschranke oder eine Reflexionslichtschranke, aber auch Teil eines Lichtgitters. Diese Sensoren können ein Gegenüber haben, das einen Reflektor oder einen Empfänger aufweist, oder sie können Taster sein, also ohne kooperatives Gegenstück auskommen. Als spezielle Ausführungsformen kann der Sensor 10 entfernungsmessend sein, also die Entfernung eines Objekts 14 ermitteln oder auf Änderungen überwachen.

Der Sensor 10 weist einen Lichtsender 16 auf, der vorzugsweise eine Leucht- oder Laserdiode im sichtbaren, ultravioletten oder infraroten Bereich ist, und dessen Betrieb von einer Treiberschaltung 18 gesteuert wird. Über eine Sendeleitung 22 ist die Treiberschaltung 18 mit einer Steuerung 24 verbunden. Die Sendeleitung 22 wird in Impedanzanpassung betrieben, um maximale Leistungsübertragung und minimale Störung durch Überlagerung mit stehenden Wellen zu erreichen. Die Steuerung 24 ist auf diese Weise in der Lage, ein elektrisches Sendemuster auf die Treiberschaltung 18 zu übertragen, welches dann mittels der Lichtquelle 16 in ein optisches Sendemuster umgewandelt wird.

Weiterhin weist der Sensor 10 einen Lichtempfänger 26 auf, beispielsweise eine Photodiode. Sowohl dem Lichtsender 16 als auch dem Lichtempfänger 26 ist jeweils eine Optik 28 bzw. 30 vorgeschaltet. Der Lichtempfänger 26 ist mit einer Vorauswertung 32 verbunden, welche das von der Photodiode in ein elektrisches Signal gewandelte Licht vorverstärkt und/oder filtert. Die Vorauswertung 32 ist mit der Steuerung 24 verbunden, in der auch die Auswertung des empfangenen Signals stattfindet.

Der Signalweg in dem Sensor 10 ist dann der Folgende: Die Steuerung 24 steuert die Treiberschaltung 18 über ein elektrisches Sendemuster auf der Sendeleitung 22 an. Das elektrische Sendemuster wird von dem Lichtsender 16 in ein optisches Sendemuster gewandelt und über die Optik 28 in den Überwachungsbereich 12 gestrahlt. Dort wird das an einem Objekt 14 remittiert oder reflektiert und kehrt zurück durch die Optik 30 in den Lichtempfänger 26. Das von dem Lichtempfänger 26 nach elektrisch gewandelte Signal wird von der Vorauswertung 32 verstärkt und gefiltert und zur weiteren Auswertung der Steuerung 24 übertragen.

Das Sendemuster kann Nutzinformationen tragen, etwa Daten im Allgemeinen oder speziell zur Synchronisation bzw. Konfiguration. Alternativ oder zusätzlich kann es kurze Pulse oder eine Modulation aufweisen. Diese Sendemuster, insbesondere ein kurzer Puls, weisen sehr steile Flanken und eine hohe zeitliche Variation auf, die im Vergleich zu einem glatten Signal sehr viele Störsignale erzeugen.

Aus der Pulslaufzeit oder der Phasenlage der Modulation kann die Steuerung 24 die Lichtlaufzeit durch den Überwachungsbereich 12 und daraus die Entfernung des remittierenden oder reflektierenden Objekts 14 errechnen. Dies kann nach anfänglicher Eichung des Sensors 10 als absolute Bestimmung der Entfernung geschehen, alternativ kann die Entfernung eines Objekts 14 eingelernt und dieses darauf überwacht werden, ob es seine Entfernung ändert.

Figur 2 zeigt die wesentlichen Elemente des soeben beschriebenen Sensors 10 in Draufsicht auf eine Platine 100. Hier und im Folgenden bezeichnen gleiche Bezugszeichen gleiche Merkmale. Die wichtigsten Schaltelemente auf der Platine 100 stellen der Lichtsender 16 mit seiner Treiberschaltung 18, der Lichtempfänger 26 mit seiner Vorauswertung 32 und die Steuerung 24 dar.

Ungefähr an den dargestellten Randlinien der Vorauswertung 32 ist ein Schirmaufbau vorgesehen, also ein Metallkäfig um den empfindlichen Lichtempfänger 26, der ihn vor Störstrahlung schützt und der ein Loch aufweist, um das zu empfangene Licht hindurchtreten zu lassen. Dieser Schirmaufbau ist geerdet. Kern der Steuerung 24 ist ein programmierbarem Logikbaustein 102, der vorzugsweise ein FPGA ist, in einer alternativen Ausführungsform aber auch in ASIC implementiert sein kann.

Die Platine 100 ist eine mehrschichtige Platine, so dass Kontakte von der Rückseite zur Vorderseite möglich sind. Steuerung 24 mit Logikbaustein 102 ist gestrichelt dargestellt, um anzudeuten, dass sie sich auf der Rückseite befinden. Die Sendeleitung 22 von der Steuerung 24 oder genauer dem Logikbaustein 102 ausgehend zur Treiberschaltung 18 und dem Lichtsender 16 ist in einer inneren Lage der mehrschichtigen Platine 100 ausgeführt.

Entgegen der Darstellung auf der linken Seite der Figur 2 ist die Sendeleitung 22 keine einfache Leitung. Um dies zu illustrieren, ist ein Abschnitt 104 der Sendeleitung 22 vergrößert dargestellt. Die Sendeleitung 22 ist über ihre ganze Länge und nicht nur in dem vergrößert dargestellten Teil in der nun zu beschreibenden Weise mehrfach ausgelegt.

Die Sendeleitung 22 besteht aus vier Einzelleitern 22a, 22b, 22c und 22d. Das zu übertragende Signal wird auf diese vier Einzelleiter 22a-d verteilt, und zwar in der besonderen Weise, dass jeweils ein Anteil auf den beiden äußeren Einzelleitern 22a und 22d in der einen Richtung und ein in Summe gleicher Anteil auf den inneren Einzelleitern 22b, 22c in der anderen Richtung, also mit entgegengesetztem Vorzeichen, übertragen wird. Wenn das Signal, wie bevorzugt, ein Strom- und kein Span nungssignal ist, so entsprechen diese Richtungen der tatsächlichen Stromflussrichtung, wie sie auch durch Pfeile in der Figur 2 dargestellt ist.

In der speziellen dargestellten Ausführung wird also ein Stromsignal der Stärke 1 auf vier Einzelsignale der Stärke I/2, -I/2, -I/2, I/2 und verteilt und in dieser Weise übertragen. Man kann dies auch so ausdrücken, dass ein Signal differenziell auf den Einzelleitern 22a und 22b und in gleicher Weise noch einmal differenziell auf den Einzelleitern 22c und 22d, letztlich also doppelt differenziell, übertragen wird.

Die Aufteilung auf vier Einzelleiter 22a-d in der beschriebenen Weise ist eine besonders günstige Ausführungsform, kann aber auch verallgemeinernd in anderen Ausführungsformen auf einer anderen Anzahl Einzelleiter vorgenommen werden. Wichtig ist, dass eine gleichmäßige Verteilung des Signals auf äußere Einzelleiter und eine in der Summe in etwa gleich starke, aber entgegengerichtete Signalübertragung auf einem oder mehreren inneren Einzelleitern vorgenommen wird. Die durch einen Stromfluss induzierten Magnetfelder werden bei dieser Anordnung weitgehend ausgelöscht, wobei der Grad der Auslöschung von der Anzahl, Geometrie und genauen Anordnung der Einzelleiter 22a-d noch abhängt.

Die Geometrie einer besonders günstigen Anordnung der Elemente sieht einen kleinsten Abstand zwischen Lichtempfänger 26 und Sendeleitung 22 von 5-6 mm, eine Breite der Einzelleiter 22a-d von jeweils 0,15 mm und einen Abstand zwischen den Einzelleitern 22a-d von jeweils 0,15 mm vor.

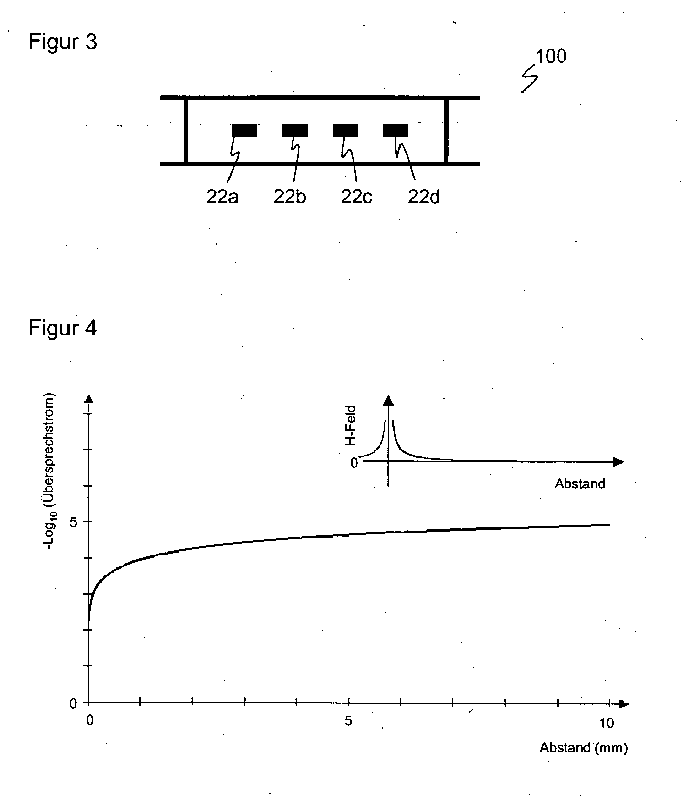

Figur 3 zeigt einen Querschnitt durch den vergrößerten Ausschnitt der Figur 2, also durch die Einzelleiter 22a-d der Sendeleitung 22. Wie zu erkennen ist, befindet sich die Sendeleitung 22 im Inneren der mehrschichtigen Platine 100 und nicht auf einer ihrer Oberflächen. Oberhalb und unterhalb der Sendeleitung 22 sind Schirmlagen aus Metall, vorzugsweise Kupfer, vorgesehen. Seitlich dicht neben den Einzelleitern 22 schließen Durchkontaktierungen, vorzugsweise ebenfalls aus Kupfer, eine Metallkammer um die Sendeleitung 22 ab, welche deren Strahlung abschirmt. Auch unterhalb des empfindlichen Lichtempfängers 26 ist eine entsprechende Schirmlage vorgesehen. Mit der Möglichkeit moderner Leiterplattenfertigungsverfahren (Micro-Via-Technologie), sehr kostengünstig eine Vielzahl von sehr dicht beieinander positionierten Durchkontaktierungen herstellen zu können, wird also ein elektromagnetischer Käfig erzeugt.

Die Schirmlagen können beispielsweise eine Dicke von 18 µm bei einer Dicke des Leiterplattenmaterials von 90 µm haben. Die Durchkontaktierungen werden in der Richtung senkrecht zur Papierebene der Figur 3 im technisch machbaren Mindestabstand angebracht, um eine möglichst durchgehende Metallwand zu bilden.

Anhand der Figuren 4 bis 6 soll nun erläutert werden, wie gut die Abschirmungswirkung durch die doppelt differenziell Ansteuerung erhöht werden kann, wie sie im Zusammenhang mit Figur 2 erklärt worden ist. Die Berechnungen basieren auf der Annahme einer Rahmenantenne bei dem Lichtempfänger 26 und einem Ansteuersignal mit einer Frequenz von 100 MHz. Für die rechnerischen Grundlagen wird auf das Lehrbuch "Hochfrequenztechnik 1" von Zinke und Brunswig, Springer-Verlag, auf S. 393 verwiesen. Hier genügt für das Verständnis, dass aus dem durch den Ansteuerstrom erzeugten H-Feld Übersprechterme entstehen, die proportional zum Betrag dieses H-Feld sind.

Figur 4 zeigt zunächst als Vergleich das Übersprechen einer herkömmlichen Einzelleitung bei Anliegen eines Stroms. Im Einsatz oben rechts in Figur 4 ist das H-Feld in gewöhnlicher linearer Darstellung gegen den lateralen Abstand aufgetragen. Es erreicht sein Maximum in der Mitte des Leiters und fällt zu beiden Seiten mit 1/x ab. Trägt man, in dem Hauptdiagramm der Figur 4 zu erkennen, Übersprechstrom logarithmisch gegen den Abstand auf, so ergibt sich ein entsprechender Abfall. Es sei daran erinnert, dass der Übersprechstrom bis auf Konstanten der Betrag des H-Felds ist. Diese Konstanten sind nicht relevant, da es nur um den Nachweis des Verbesserungsfaktors durch die erfindungsgemäße doppelt differenzielle Ansteuerung geht.

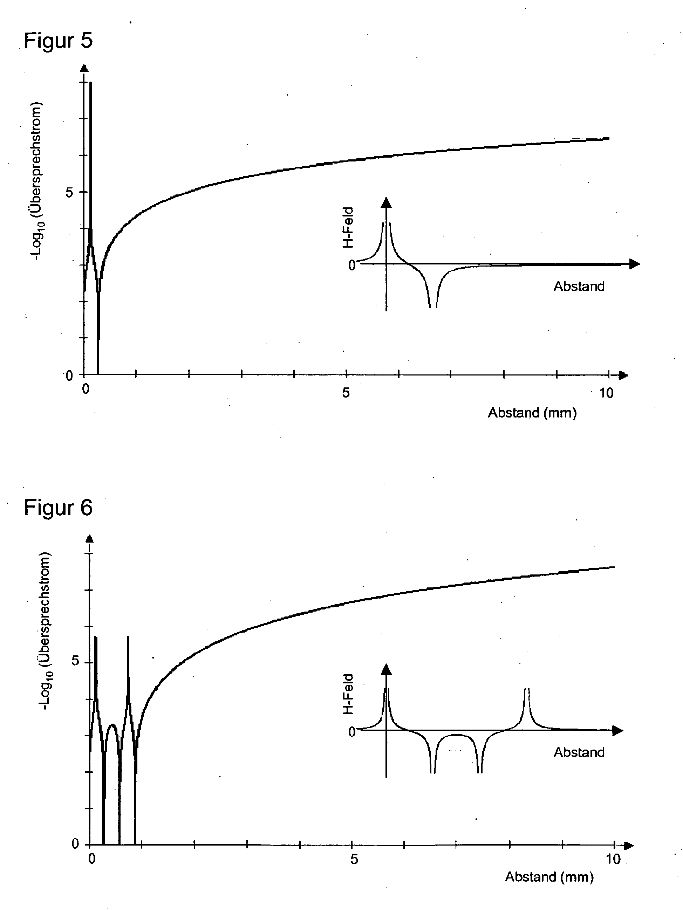

Figur 5 zeigt in einem zweiten Vergleich das Übersprechen bei einer herkömmlichen differenziellen Leitung. Figur 5 ist ganz analog der Figur 4 aufgebaut, die entgegengesetzten Ströme in den beiden Einzelleitern lassen das H-Feld zu beiden Seiten wesentlich schneller als mit 1/x abfallen, nur bei sehr kleinen Abständen sieht man noch den Doppelpeak. Man gewinnt gegenüber der Einzelleitung einen zusätzlichen Übersprechdämpfungsfaktor von ungefähr 10, wenn man die Werte beispielsweise bei dem für die beschriebene Ausführungsform besonders relevanten Abstand von 5 mm abliest.

In Figur 6 ist analog zu den beiden Darstellungen der Figuren vier und fünf H-Feld und Übersprechstrom der erfindungsgemäßen doppelt differenziellen Ansteuerung gegen den Abstand aufgetragen. Hier wird also das Signal I mit jeweils halber Amplitude I/2 auf zwei äußeren Leitungen in der einen und zwei inneren Leitungen in der anderen Richtung übertragen. Bei sehr kleinen Abständen entsteht entsprechend ein H-Feld, das grob die Form eines W mit zwei äußeren Maxima und zwei inneren Minima hat. Selbstverständlich ist eine Stromumkehr vorstellbar, wobei sich die dargestellten Funktionen des H-Felds jeweils an der Y-Achse spiegeln. Wie zu erkennen, wird der Effekt einer herkömmlichen differenziellen Leitung bei einem Abstand von 5 mm noch einmal um einen Faktor 10 verstärkt, wenn die Ansteuerung, wie beschrieben, doppelt differenziell erfolgt.

Zusammenfassend lässt sich der erforderliche Übersprechdämpfungsfaktor durch Kombination dreier Maßnahmen erreichen: Erstens wird ein Faktor von 100 durch die doppelt differenzielle Ansteuerung gegenüber einem Faktor 10 bei herkömmlicher einfach differenzieller Ansteuerung gewonnen, zweitens ist ein Schirmaufbau um das empfindliche Schaltelement vorgesehen, hier um den Lichtempfänger 26, und drittens trägt die Kammerbildung durch Schirmlagen und Durchkontaktierungen mit einer Reduktion des Übersprechens um 4 Zehnerpotenzen bei.

Demnach lässt keine Einzelmaßnahme allein ein ausreichend geringes Übersprechverhalten zu. Der entscheidende Faktor 10, bei dem im hier vorliegenden Miniaturisierungsgrad mit einem Abstand in der Größenordnung von nur 5 mm zwischen Sendeleitung 22 und Lichtsender 16, dessen remittiertes oder reflektiertes Licht nach zumindest einigen Metern Laufstrecke noch sicher detektiert werden soll, ist ohne die erfindungsgemäße doppelt differenzielle Ansteuerung nicht zu erreichen, so dass ein Sensor 10 ohne dieses erfindungsgemäße Merkmal nicht zuverlässig arbeitet.

Das Problem, durch Übersprechen eine sichere Auswertung unmöglich zu machen, tritt besonders bei stark und schnell variierenden Sendemustern, aber auch bei der Entfernungsmessung von kleinen Abständen auf, weil aufgrund der Lichtgeschwindigkeit der Lichtempfänger 26 das Licht bereits empfängt, während das Sendemuster noch zur Ansteuerung auf der Sendeleitung 22 anliegt und damit das Übersprechen genau zur kritischen Zeit mit dem Empfang überlagert. Dies gilt auch noch bei extrem kurzen Lichtpulsen von einigen Nanosekunden, wenn die zu messende Entfernung der der Lichtlaufzeit entsprechenden Entfernungen diesen einigen Nanosekunden, nämlich wenigen Meter, entspricht. Durch die erfindungsgemäße Abschirmung kann der Sensor 10 auch in diesem Messbereich arbeiten.

## Patentansprüche

1. Optoelektronischer Sensor (10) mit einem Lichtsender (16) und mit einer Steuerung (24), die eine Sendeleitung (22) zu dem Lichtsender (16) aufweist, welche für die Übertragung eines elektrischen Sendemusters ausgebildet ist, das der Lichtsender (16) in ein optisches Sendemuster umwandeln kann, **dadurch gekennzeichnet, dass** die Sendeleitung (22) zur differenziellen Übertragung des elektrischen Sendemusters mit mehreren Einzelleitern (22a-22d) ausgeführt ist, wobei im Betrieb mindestens zwei äußere Einzelleiter (22a, 22d) das Signal mit einem Vorzeichen und mindestens ein innerer Einzelleiter (22b, 22c) das Signal mit entgegengesetztem Vorzeichen differenziell übertragen, um ein von der Sendeleitung (22) ausgehendes Übersprechen zu verringern.

2. Sensor (10) nach Anspruch 1, **dadurch gekennzeichnet, dass** die Steuerung (24), Sendeleitung (22) und Lichtsender (16) für eine Signalübertragung über den Strom in Impedanzanpassung ausgebildet sind.

3. Sensor (10) nach Anspruch 1 oder 2, **dadurch gekennzeichnet, dass** die Sendeleitung (22) zwei äußere (22a, 22d) und zwei innere Einzelleiter (22b, 22c) aufweist, die insbesondere gleichmäßig voneinander beabstandet in einer gemeinsamen Ebene liegen, und die Steuerung (24) dafür ausgebildet ist, den Lichtsender (16) doppelt differenziell anzusteuern, indem jeweils ein gleicher Anteil des Gesamtsignals auf den beiden äußeren Einzelleitern (22a, 22d) in der einen Richtung sowie mit entgegengesetztem Vorzeichen auf den beiden inneren Einzelleitern (22b, 22c) in der anderen Richtung übertragen wird.

4. Sensor (10) nach einem der vorhergehenden Ansprüche, **dadurch gekennzeichnet, dass** er einen Lichtempfänger (16) aufweist und wobei die Sendeleitung (22) einen geringen Abstand, insbesondere ungefähr 5 mm, zu dem Lichtempfänger (26) aufweist.

5. Sensor (10) nach Anspruch 4, **dadurch gekennzeichnet, dass** Lichtsender (16), Lichtempfänger (26) und Steuerung (24) in dieser Reihenfolge nebeneinander auf einer gemeinsamen Platine (100) angeordnet sind.

6. Sensor (10) nach Anspruch 5, **dadurch gekennzeichnet, dass** die Platine (100) mehrschichtig ist und die Sendeleitung (22) auf einer inneren Schicht vorgesehen ist, welche durch Schirmlagen und Durchkontaktierungen in einer abschirmenden Kammer eingeschlossen ist.

7. Sensor (10) nach einem der Ansprüche 4 bis 6, **dadurch gekennzeichnet, dass** die Steuerung (24) zumindest teilweise in ASIC oder auf einem programmierbaren Logikbaustein (102) implementiert ist, insbesondere einem FPGA.

8. Sensor (10) nach Anspruch 6 und 7, **dadurch gekennzeichnet, dass** der Logikbaustein (102) auf der einen und Lichtempfänger (26) und Lichtsender (16) auf der anderen Seite der Platine (100) angeordnet sind.

9. Sensor (10) nach einem der Ansprüche 4 bis 8, **dadurch gekennzeichnet, dass** ein Schirmaufbau um den Lichtempfänger (26) vorgesehen ist.

10. Sensor (10) nach einem der Ansprüche 4 bis 9, **dadurch gekennzeichnet, dass** die Steuerung (24) dafür ausgebildet ist, aus einer Lichtlaufzeit von Lichtsender (16) zu Lichtempfänger (26) die Entfernung oder eine Entfernungsänderung eines remittierenden oder reflektierenden Objekts (14) zu bestimmen.

11. Sensor (10) nach Anspruch 10, **dadurch gekennzeichnet, dass** das Sendemuster Pulse zur Bestimmung der Lichtlaufzeit aus einer Pulslaufzeit oder eine aufmodulierte Schwingung zur Bestimmung der Lichtlaufzeit aus einer Phasenverschiebung aufweist.

12. Sensor (10) nach Anspruch 10 oder 11, **dadurch gekennzeichnet, dass** der Sensor (10) zur Messung von nahen Entfernungen ausgebildet ist, bei denen Sende- und Empfangspuls zeitlich überlappen.

13. Sensor (10) nach einem der Ansprüche 4 bis 12, **dadurch gekennzeichnet, dass** er ein Lichtgitter mit einer Vielzahl von Lichtsendern (16) und einer gleichgroßen Anzahl Lichtempfänger (26) ist, die insbesondere eine gemeinsame Steuerung (24) aufweisen.

14. Verfahren zur abgeschirmten Signalübertragung von einer Steuerung (24) zu einem Lichtsender (16), bei dem ein elektrisches Sendemuster von der Steuerung (24) über eine Sendeleitung (22) an den Lichtsender (16) übertragen und von dem Lichtsender (16) in ein optisches Sendemuster umgewandelt wird, **dadurch gekennzeichnet, dass** das Signal für das elektrische Sendemuster aufgeteilt und über mindestens zwei äußere Einzelleiter (22a, 22d) der Sendeleitung (22) mit einem Vorzeichen und über mindestens einen inneren Einzelleiter (22b, 22c) der Sendeleitung (22) mit entgegengesetztem Vorzeichen differenziell übertragen wird, um ein von der Sendeleitung (22) ausgehendes Übersprechen zu verringern.

15. Verfahren nach Anspruch 14, **dadurch gekennzeichnet, dass** der Lichtsender (16) von der Steuerung (24) doppelt differenziell angesteuert wird, indem jeweils ein Viertel des Signals auf zwei äußeren Einzelleitern (22a, 22d) und in Gegenrichtung auf zwei inneren Einzelleitern (22b, 22c) übertragen wird.

16. Verfahren nach Anspruch 14 oder 15, **dadurch gekennzeichnet, dass** aus einer Lichtlaufzeit von dem Lichtsender (16) zu einem Lichtempfänger (26) die Entfernung oder eine Entfernungsänderung eines remittierenden oder reflektierenden Objekts (14) bestimmt wird.

## Claims

1. Optoelectronic sensor (10) with a light emitter (16) and a control (24) having a transmission line (22) to the light emitter (16) which is made for the transmission of an electrical transmission pattern that the light emitter (16) can convert into an optical transmission pattern,
**characterized in that**
the transmission line (22) is made for a differential transmission of the electrical transmission pattern with a plurality of individual lines (22a-22d), wherein during operation at least two outer individual lines (22a, 22d) transmit the signal with a sign and at least one inner individual line (22b, 22c) transmits the signal with the opposite sign in order to reduce crosstalk emanating from the transmission line (22).

2. The sensor (10) according to claim 1,
**characterized in that** the control (24), the transmission line (22) and the light emitter (16) are made for a signal transmission via the current in impedance matching.

3. The sensor (10) according to claim 1 or 2,
**characterized in that** the transmission line (22) comprises two outer (22a, 22d) and two inner individual lines (22b, 22c), which are in particular arranged in a common plane with equal spacing from each other, and wherein the control (24) is configured to control the light emitter (16) double differentially by transmitting an equal share of the total signal on the two outer individual lines (22a, 22d) in one direction as well as with opposite sign on the two inner lines (22b, 22c) in the other direction, respectively.

4. The sensor (10) according to any one of the preceding claims,
**characterized in that** it comprises a light receiver (26), wherein the transmission line (22) has a short distance, in particular about 5 mm, to the light receiver (26).

5. The sensor (10) according to claim 4,
**characterized in that** the light emitter (16), light receiver (26), and control (24) are arranged **in that** order next to each other on a common circuit board (100).

6. The sensor (10) according to claim 5,
**characterized in that** the circuit board (100) is multi-layered and the transmission line (22) is provided on an inner layer that is enclosed in a shielding chamber by shield layers and vias.

7. The sensor (10) according to any of claims 4 to 6,
**characterized in that** the control (24) is implemented at least partially in ASIC or on a programmable logic device (102), in particular an FPGA.

8. The sensor (10) according to claim 6 or 7,
**characterized in that** the logic device (102) is arranged on one side and light receiver (26) and light emitter (16) are arranged on the other side of the circuit board (100).

9. The sensor (10) according to any of claims 4 to 8,
**characterized in that** a shield structure is provided around the light receiver (26).

10. The sensor (10) according to any of claims 4 to 9,
**characterized in that** the control (24) is configured to determine the distance or a distance change of a remitting or reflecting object (16) from a light transit time from the light emitter (16) to the light receiver (26).

11. The sensor (10) according to claim 10,
**characterized in that** the transmission pattern comprises pulses to determine the light transit time from a pulse transit time or a modulated oscillation to determine the light transit time from a phase shift.

12. The sensor (10) according to claim 10 or 11,
**characterized in that** the sensor (10) is configured for a measurement of near distances, where emitted and received pulse overlap in time.

13. The sensor (10) according to any of claims 4 to 12,
**characterized in that** it comprises a light grid with a plurality of light emitters (16) and an equal number of light receivers (26) that in particular have a common control (24).

14. Method for shielded signal transmission of a control (24) to a light emitter (16), in which an electrical transmission pattern is transmitted from the control (24) on a transmission line (22) to the light emitter (16) and is converted into an optical transmission pattern by the light emitter (16),
**characterized in that**
the signal for the electrical transmission pattern is split and differentially transmitted on at least two outer individual lines (22a, 22d) of the transmission line (22) with a sign and on at least one inner individual line (22b, 22c) of the transmission line (22) with the opposite sign in order to reduce crosstalk emanating from the transmission line (22).

15. The method according to claim 14,
**characterized in that** the light emitter (16) is controlled double differentially by the control (24) by transmitting a quarter of the signal on two outer individual lines (22a, 22d) and in the opposite direction on two inner individual lines (22b, 22c), respectively.

16. The method according to claim 14 or 15,
**characterized in that** a distance or a distance change of a remitting or reflecting object (14) is determined from a light transit time from the light emitter (16) to the light receiver (26).

## Revendications

1. Capteur optoélectronique (10) comprenant un émetteur de lumière (16) et comprenant une commande (24), qui comprend une ligne émettrice (22) vers l'émetteur de lumière (16), laquelle est réalisée pour la transmission d'un motif d'émission électrique, que l'émetteur de lumière (16) est capable de convertir en un motif d'émission optique,
**caractérisé en ce que**
la ligne émettrice (22) est réalisée pour la transmission différentielle du motif d'émission électrique avec plusieurs lignes individuelles (22a-22d), et en fonctionnement au moins deux lignes individuelles extérieures (22a, 22d) transmettent le signal avec un signe et au moins une ligne individuelle intérieure (22b, 22c) transmet le signal de manière différentielle avec un signe opposé, afin de réduire une diaphonie partant de la ligne émettrice (22).

2. Capteur (10) selon la revendication 1, **caractérisé en ce que** la commande (24), la ligne émettrice (22) et l'émetteur de lumière (16) sont réalisés pour une transmission de signaux via le courant en adaptation d'impédance.

3. Capteur (10) selon la revendication 1 ou 2, **caractérisé en ce que** la ligne émettrice (22) comprend deux lignes individuelles extérieures (22a, 22d) et deux lignes individuelles intérieures (22b, 22c), qui sont en particulier disposées dans un plan commun à distance régulière les unes des autres, et la commande (24) est réalisée pour piloter l'émetteur de lumière (16) de manière doublement différentielle, **en ce qu'**une part égale du signal global est respectivement transmise vers les deux lignes individuelles extérieures (22a, 22d) dans une direction, et avec un signe opposé vers les deux lignes individuelles intérieures (22b, 22c) dans l'autre direction.

4. Capteur (10) selon l'une des revendications précédentes, **caractérisé en ce qu'**il comprend un récepteur de lumière (16), et la ligne émettrice (22) présente par rapport au récepteur de lumière (26) une faible distance, en particulier d'environ 5 mm.

5. Capteur (10) selon la revendication 4, **caractérisé en ce que** l'émetteur de lumière (16), le récepteur de lumière (26) et la commande (24) sont agencés dans cette succession les uns à côté des autres sur une platine commune (100).

6. Capteur (10) selon la revendication 5, **caractérisé en ce que** la platine (10) est multicouches, et la ligne émettrice (22) est prévue sur une couche intérieure, qui est enfermée dans une chambre blindée par des couches de blindage et par des contacts traversants.

7. Capteur (10) selon l'une des revendications 4 à 6, **caractérisé en ce que** la commande (24) est mis en oeuvre au moins partiellement dans un composant ASIC ou sur un composant logique programmable (102), en particulier un FPGA.

8. Capteur (10) selon la revendication 6 et 7, **caractérisé en ce que** le composant logique (102) est agencé sur un côté de la platine (100), et le récepteur de lumière (26) et l'émetteur de lumière (16) sont agencés sur l'autre côté de la platine (100).

9. Capteur (10) selon l'une des revendications 4 à 8, **caractérisé en ce qu'**il est prévu une superstructure de blindage autour du récepteur de lumière (26).

10. Capteur (10) selon l'une des revendications 4 à 9, **caractérisé en ce que** la commande (24) est réalisée pour déterminer, à partir d'un temps de parcours de la lumière depuis l'émetteur de lumière (16) jusqu'au récepteur de lumière (26), l'éloignement ou une modification de l'éloignement d'un objet ré-émetteur ou réfléchissant (14).

11. Capteur (10) selon la revendication 10, **caractérisé en ce que** le motif d'émission comprend des impulsions pour déterminer le temps de parcours de la lumière à partir d'un temps de propagation des impulsions, ou une oscillation ajoutée par modulation pour déterminer le temps de propagation de la lumière à partir d'un décalage de phase.

12. Capteur (10) selon la revendication 10 ou 11, **caractérisé en ce que** le capteur (10) est réalisé pour la mesure de distances proches, pour lesquelles les impulsions d'émission et de réception se chevauchent dans le temps.

13. Capteur (10) selon l'une des revendications 4 à 12, **caractérisé en ce qu'**il est une barrière lumineuse avec une pluralité d'émetteurs de lumière (16) et un nombre égal de récepteurs de lumière (26), qui comportent en particulier une commande commune (24).

14. Procédé et pour la transmission de signaux avec protection par un blindage depuis une commande (24) vers un émetteur de lumière (16), dans lequel un motif d'émission électrique est transmis par la commande (24) via une ligne émettrice (22) à l'émetteur de lumière (16) et est converti par l'émetteur de lumière (16) en un motif d'émission optique,
**caractérisé en ce que**
le signal pour le motif d'émission électrique est subdivisé et est transmis de manière différentielle via au moins deux lignes individuelles extérieures (22a, 22d) de la ligne émettrice (22) avec un signe et via au moins une ligne individuelle intérieure (22b, 22c) de la ligne émettrice (22) avec un signe opposé, afin de réduire une diaphonie partant de la ligne émettrice (22).

15. Procédé selon la revendication 14, **caractérisé en ce que** l'émetteur de lumière (16) est piloté de manière doublement différentielle par la commande (24) **en ce qu'**un quart du signal est transmis respectivement à deux lignes individuelles extérieures (22a, 22d) et en direction opposée à deux lignes individuelles intérieures (22b, 22c).

16. Procédé selon la revendication 14 ou 15, **caractérisé en ce que** l'on détermine à partir d'un temps de propagation de la lumière depuis l'émetteur de lumière (16) jusqu'à un récepteur de lumière (26) l'éloignement ou une modification de l'éloignement d'un objet ré-émetteur ou réfléchissant (14).
